(19) Europäisches Patentamt
European Patent Office
Office européen des brevets

(11) **EP 3 254 210 B1**

(12) **EUROPEAN PATENT SPECIFICATION**

(45) Date of publication and mention
of the grant of the patent:
**20.01.2021 Bulletin 2021/03**

(51) Int Cl.:
*G06F 16/182* (2019.01)   *G06F 16/22* (2019.01)
*G06F 16/2458* (2019.01)

(21) Application number: **16779484.1**

(22) Date of filing: **08.03.2016**

(86) International application number:
**PCT/CN2016/075873**

(87) International publication number:
**WO 2016/165509 (20.10.2016 Gazette 2016/42)**

(54) **BIG DATA STATISTICS AT DATA-BLOCK LEVEL**

GROSSDATENSTATISTIKEN AUF DATENBLOCKEBENE

STATISTIQUES DE MÉGADONNÉES AU NIVEAU D'UN BLOC DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.04.2015 US 201514687568**

(43) Date of publication of application:
**13.12.2017 Bulletin 2017/50**

(60) Divisional application:
**20214887.0**

(73) Proprietor: **HUAWEI TECHNOLOGIES CO., LTD.
Shenzhen, Guangdong 518129 (CN)**

(72) Inventors:
• **NI, Demai
Danville, CA 94506 (US)**
• **ZHANG, Guogen
San Jose, CA 95120 (US)**
• **ZHOU, Qingqing
Shenzen, Guangdong 518129 (CN)**
• **SUN, Jason Yang
Palo Alto, CA 94303 (US)**

(74) Representative: **Pfenning, Meinig & Partner mbB
Patent- und Rechtsanwälte
Theresienhöhe 11a
80339 München (DE)**

(56) References cited:
**CN-A- 102 375 853      CN-A- 102 968 423
US-A1- 2014 046 903      US-A1- 2014 122 429
US-A1- 2014 122 429**

## Description

### FIELD OF THE INVENTION

The present disclosure relates generally to the field of database management, and more specifically, to the field of data distribution in a distributed file system.

### BACKGROUND OF THE INVENTION

Large-scale distributed file systems have rapidly gained in popularity in recent history. Distributed file systems are valued for advantages in scalability, fault tolerance, location and data access transparency when compared to non-distributed file systems. Many large-scale distributed file systems use extremely large file system block sizes (often on the order of a megabyte (MB) in magnitude) compared to disk block sizes (which are often on the order of a kilobyte (KB) in magnitude). For example, in Google File System (GFS) files are divided into fixed-size blocks of 64 MB. Hadoop distributed file system (HDFS) uses a 64MB file system block by default, with many installations employing a larger 128MB file system block size. For example, the Parquet format requires a 256MB file system block size, with a recommended size of between 512MB and 1GB. A benefit of larger file system block sizes is minimization of the computing cost of seeks. Such file system designs leverage improved transfer rates made possible by advancing hardware designs, and often provide dramatically improved performance, in terms of elapsed time, in cases where a full file/table scan is performed. Several data store solutions adapt the access method to find information based on primary keys of data stored via key-value format.

Several attempts have been made at providing online analytical processing (OLAP) for data stored via distributed file systems, including middle layer solutions such as SQL-over-Hadoop or SQL-over-Big Data, with the goal of providing reporting and data mining for distributed file system architectures. Such attempts frequently involve complex queries requiring an optimizer for both query planning and selection operations. Other attempts such as Big SQL, Stinger.next (with Hive), and Shark employ optimizers that use an external database to store pre-collected and/or pre-calculated statistical data. These approaches are quite similar to a Relational Database Management System (RDMS), such that in implementation well-known optimization logic for database queries may be used. However, while in conventional RDMS the statistical data tables and data tables storing records are managed by the same system, for a conventional distributed file system no such mechanism exists, bringing about the need to utilize another database (e.g., DB2, Hive, PostgreSQL, etc.) in order to store the statistical data table. This architecture design results in statistical data that do not co-exist on the same data node as the data represented, increasing the complexity of the network and of the communication protocol for the distributed data store. Furthermore in these systems, OLAP, which often utilizes SQL analytic functions that can be easily pre-calculated at the data block level (e.g., such as max, min, count, sum), cannot be readily used due to the separation of data records and statistical data. System maintenance is more complex for systems storing data records and statistical data separately as well.

US 2014/046903 A1 relates to the mobile communication field, and disclose a data backup method for a mobile terminal, where the method includes: receiving a data backup request; backing up information data by blocks and generating backup data of each block; scanning the backup data of each block and generating corresponding statistics information; and storing the backup data and the statistics information of each block.

CN 102 968 423 A relates to distributed file systems where statistical data and data are all saved in a data container. To speed up access of data, data portions may be prefetched.

### SUMMARY OF THE INVENTION

According to the present application, the above objects are solved by the claimed matter according to the independent claims. Statistical data collection on data stores often involves a full scan of tables containing the data, and may require computationally-intensive and/or high network bandwidth operations. Examples of the present disclosure provide a system and method to incrementally collect and aggregate statistics of data stored in a distributed file system architecture, implementing a novel statistical data block ("Stats-block") collocated with data blocks of each data node in the distributed file system. By having a configurable frequency at which statistical data are collected, the data gathering process can be tailored to reduce resource requirements of computing systems in the data network, by piggybacking on existing mechanisms of the native file system (e.g., Hadoop Archive for HDFS, Major Compaction for HBase, etc.).

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one aspect, examples of the present invention according to the present disclosure provide a system and method for storing statistical data of records stored in a distributed file system. In one aspect a statistical data block is allocated in a memory buffer of a data node for storing statistical data of records stored in a storage disk of the data node. Each data block of the plurality of data blocks in the data node has a respective entry in the statistical data block, which is collocated with data blocks on the data node. Statistical data of records stored in the distributed file system are collected, and written to statistical data block in the memory of the data node.

More specifically, an example according to the present disclosure provides a method of searching for data in a distributed file system. The method includes receiving a data request at a name node of the distributed file system, the distributed file system including a data node with a storage disk having a plurality of data blocks. The data node stores statistical data of records stored in the plurality of data blocks, the statistical data stored in a statistical data block in a memory of the data node. The method further includes determining qualified data blocks of the plurality of data blocks that satisfy the request, based on comparing the statistical data of records with a criteria of the data request, and determining qualified records of the qualified data blocks, based on the data request.

In another example embodiment, an apparatus is used to store statistical data of records stored in a distributed file system. The apparatus comprises: a transceiver that communicates with a coordinator node of a distributed file system, a memory, an allocation element that allocates a statistical data block in the memory, the statistical data block stores statistical data of records stored in the distributed file system, an associate element that associates a plurality of entries of the statistical data block with respective data blocks of the plurality of data blocks, a collecting element that collects the statistical data of the records, and a writing element that writes the statistical data to the plurality of entries of the statistical data block, the plurality of entries storing statistical data of associated data blocks of the plurality of data blocks.

The foregoing is a summary and thus contains, by necessity, simplifications, generalizations and omissions of detail; consequently, those skilled in the art will appreciate that the summary is illustrative only and is not intended to be in any way limiting. Other aspects, inventive features, and advantages of the present invention, as defined solely by the claims, will become apparent in the non-limiting detailed description set forth below.

## BRIEF DESCRIPTION OF THE DRAWINGS

Embodiments of the present invention will be better understood from a reading of the following detailed description, taken in conjunction with the accompanying drawing figures in which like reference characters designate like elements and in which:

Fig. 1 is a block diagram depicting an exemplary distributed file system architecture, in accordance with an example of the present invention of the present disclosure.

Fig. 2 is a schematic illustration depicting an exemplary Stats-block of a data node in a system utilizing a distributed file system, in accordance with an example of the present invention of the present disclosure.

Fig. 3 is a schematic illustration depicting several virtual block configurations for implementing a Stats-block, in accordance with an example of the present invention of the present disclosure.

Fig. 4 is a flowchart illustrating an exemplary process for performing a record search, in accordance with an example of the present invention of the present disclosure.

Fig. 5 is a block diagram illustrating an exemplary computer system, with which embodiments of the present disclosure may be implemented.

## DETAILED DESCRIPTION OF THE INVENTION

By storing statistical data in memory, close to data blocks (e.g., collocated), a system according to embodiments of the present disclosure is able to perform fast retrieval and updates of data stored in a distributed architecture, e.g., extremely large datasets stored via a distributed file system architecture. The ability to keep statistical data collocated with the data block not only substantially increases the speed of the collection process, but also expands the optimization capacity for distribution architectures such as massively parallel processing (MPP) architecture, by obviating the need of communication with a node at a higher tier (e.g., coordinator node in an MPP system; Name Node for HDFS) in order to collect statistical data. Further, statistical data and sensitive information are able to be aggregated up to the cluster level (e.g., Name Node in HDFS). The system and methods according to the present disclosure provide statistical data for extremely large datasets (so-called "Big Data") in a manner akin to that which is provided in a conventional relational database (RDMS). Furthermore, a user-defined statistical data collection mechanism can be used via a plug-in mechanism of the distributed file system, in order to handle various kinds of data as specified by the user. Such user-defined features add the facility to pre-calculate data for OLAP-like functions, as well as the flexibility of content management.

Reference will now be made in detail to the various embodiments of the present disclosure, examples of which are illustrated in the accompanying drawings. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Some portions of the detailed descriptions which follow are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer generated step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present claimed subject matter, discussions utilizing terms such as "storing," "creating," "protecting," "receiving," "encrypting," "decrypting," "destroying," or the like, refer to the action and processes of a computer system or integrated circuit, or similar electronic computing device, including an embedded system, that manipulates and transforms data represented as physical (electronic) quantities within the computer system's registers and memories into other data similarly represented as physical quantities within the computer system memories or registers or other such information storage, transmission or display devices.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present disclosure, discussions utilizing terms such as "processing" or "accessing" or "executing" or "storing" or "rendering" or the like, refer to the action and processes of a computer system, or similar electronic computing device, that manipulates and transforms data represented as physical (electronic) quantities within the computer system's registers and memories and other computer readable media into other data similarly represented as physical quantities within the computer system memories or registers or other such information storage, transmission or display devices. When a component appears in several embodiments, the use of the same reference numeral signifies that the component is the same component as illustrated in the original embodiment.

Examples of the present disclosure include a novel system and method for statistical data collection and storage in memory collocated with the raw data block. Herein, the term "Stats-block" is used to describe a data block (at least one data block, potentially several) of a data node that is reserved for statistical data collection, the data stored in permanent storage (e.g., hard disk, SSD and/or flash storage), and kept in memory at the node (e.g., the data node). Herein, the term "Stats-Entry" is used to describe an entry storing statistical data at the Stats-block. The entry may be in several formats, including an arrayList. Stats-Entry includes entries made at two levels: the node level and; the block level. Herein, the term "Node-Stats-Entry" is used to describe an entry regarding statistical data at the node level of a distributed file system architecture. Herein, the term "Block-Stats-Entry" is used to describe an entry regarding statistical data at the data block level of a distributed file system architecture. The Block-Stats-Entry is typically made such that a 1-to-1 mapping to each data block of the data node containing the Stats-block is formed. The Node-Stats-Entry forms a 1-per-Stats-block mapping (that is, one Node-Stats-Entry for each data node). In some examples of the present invention, more than one Block-Stats-Entry may be mapped to one data block. The reason to reserve more than one Block-Stats-Entry for one data block is to allow for very many entries on the data lock, such that the statistical data would not readily be accommodated by just one Block-Stats-Entry. According to various examples of the present invention, statistical data are collected either in real-time or during major compaction processes of a distributed file system, leveraging a native plug-in framework.

An exemplary architecture design of a distributed file system according to examples of the present invention of the present disclosure is described below. For simplicity in describing the architecture, only one Stats-block per data node is discussed in the exemplary architecture. However, it should be understood that one Stats-block per data node is an exemplary number only, and that other numbers are consistent with the scope of the present disclosure. Factors which are determinative for selecting the appropriate number of Stats-blocks for each data node include the total disk storage available on the computing system upon which the distributed file system is implemented, as well as the memory capacity of the computing system. In general, the Stats-blocks are preferably able to be completely stored in memory, and possess a preassigned entry for each data block in the data node, where entries stored in the data blocks represent the same data characteristics.

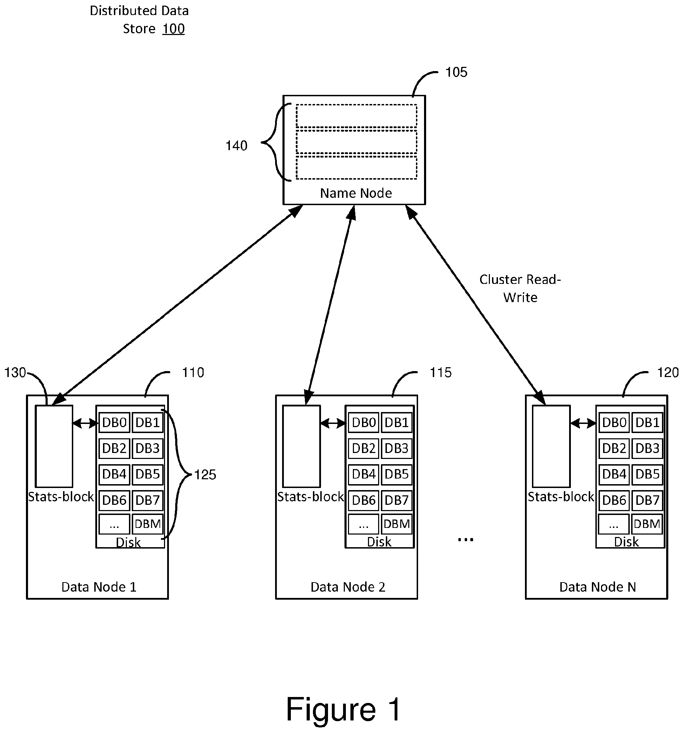

Referring now to Fig. 1, an exemplary system 100 implementing a distributed file system architecture according examples of the present invention of the present disclosure is illustrated. Exemplary system 100 depicts a distributed file system implemented via HDFS. While system 100 is depicted as being implemented via HDFS, it will be appreciated that embodiments according to the present disclosure are not limited to HDFS, and are amenable to implementation via a number of distributed file system architectures. For convenience, terminology common to HDFS will be used to describe components and tiers of the distributed file system - e.g., "name node" to describe a top tier of the distributed file system, "data node" to describe a middle tier, and "data block" to describe a lower tier - such terminology should not be construed as limiting the architectures on which the system and methods of the present disclosure may be implemented.

The system 100 includes a name node 105, and a plurality of data nodes 110, 115, and 120. The name node 105 and data nodes 110-120 are computing systems possessing one or more processors, memory, data storage, network connection(s), and other components common to computing systems. Each data node includes a respective plurality of data blocks 125. Each data node is configured to serve up blocks of data over a network using a block protocol specific to the file system (e.g., HDFS). Communication amongst devices in the system 100 can be made via TCP/IP, or other form of network communication. Each data node also includes a Stats-block 130, which includes dedicated memory of its data node for processing read/write tasks assigned to the data node. Optionally, a Node-Stats-block 140 is implemented at the name node 105. The functionality of Stats-block 130, and the optional Node-Stats-block 140, is described in greater detail below.

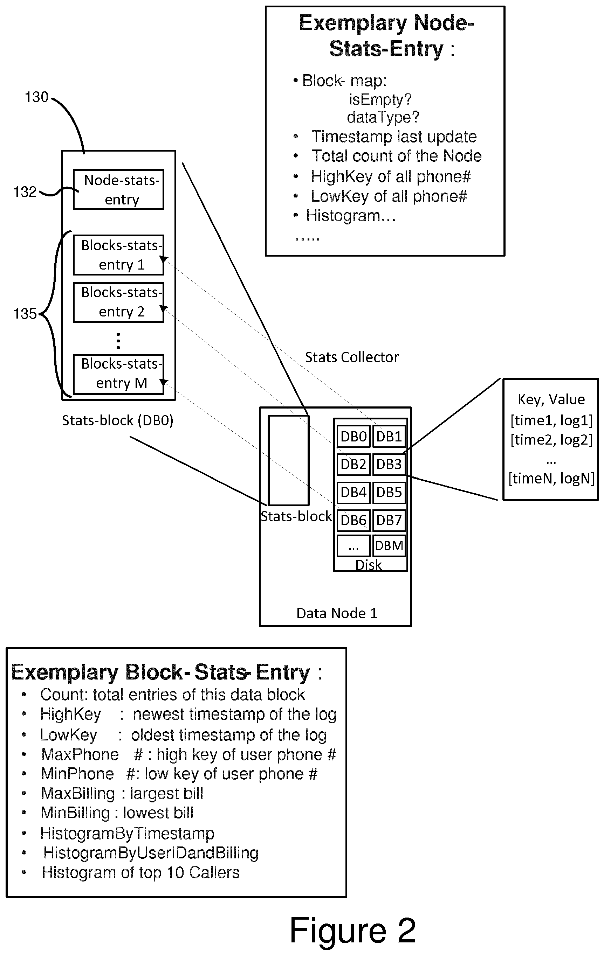

Referring now to Fig. 2, an exemplary data node of a distributed network architecture according to examples of the present invention of the present disclosure is illustrated. The data node includes a plurality of data blocks, and a Stats-block 130. The Stats-block 130 is configured to store statistical data of data stored in the distributed network, specifically data stored at the data node implementing the particular Stats-block (e.g., data node 1 of Fig. 2). Each data node in the distributed network preferably implements a Stats-block, which stores statistical data regarding its particular data node in memory. As depicted in Fig. 2, Stats-block 130 includes a Node-stats-entry 132, and a plurality of Blocks-stats-entries 135. According to examples of the present invention of the present disclosure, Stats-block 130 is configured to have a 1-to-1 mapping of Blocks-stats-entries with data blocks of the data node. That is, for each data block of the data node, a respective Blocks-stats-entry will be made in the Stats-block 130. Thus, Blocks-stats-entry 1 is mapped to data block 1 (DB1), Blocks-stats-entry 2 is mapped to data block 2 (DB2), and so on. In this manner, statistical data can be kept at the data block level, aggregated at the Stats-block 130 (which itself is a data block, e.g., DB0 of the data node, reserved for statistical data collection) The Stats-block is also stored in memory, enabling fast data read. The total size of a Stat-Block is preferably constrained according to the system memory size, as the Stat-Block is configured to remain in a memory store when a system according to the present disclosure is operating under typical conditions. Periodically, the statistical data contained in memory are flushed to disk storage, in order to store the data persistently.

For example, for a data node with 2TB of disk storage and designed to have 256MB per data block, there are in total 8000 data blocks. Stats-block will occupy one block (e.g., data block 0). The Stats-block will therefore be divided into 8000 entries (for example, as an array), with entry 0 reserved for a header (e.g., Node-Stats-Entry) and entries 1-7999 for each respective data block. In this example, there will be a 32KB Block-Stats-Entry for each data block. In general, the number of data blocks for the data node is determined by the size of the storage divided by the data block size, and the size of the Stats-block is given by:

$$Stats\text{-}block\ size = data\ block\ size\ /\ total\ number\ of\ data\ blocks$$

Data forming the extremely large datasets common to big data can arise from many sources, including online stores, weather forecasting, etc. To better illustrate embodiments of the present disclosure, an example including a data store of phone logs for a network carrier is depicted. In the example, data of the phone logs are stored in a key-value format, with the time of the call being the key, and the respective log information being the value associated with that key (e.g., key-value entries associated with DB3 of Fig. 2). For a phone log, exemplary statistical data collected at the data block-level can include: the count (that is, total entries of the data block); high key (most recent timestamp); low key (oldest timestamp); max phone number (high key of user phone number); min phone number (low key of user phone number); max billing (largest bill); min billing (lowest bill); histogram by timestamp; histogram by userID and billing, and histogram of top 10 callers. Statistical data collected at the node-level can include: block map utilization; block map data type; timestamp of last update; total count of the node; high key of all phone numbers; low key of all phone number, to name a few. Other collected statistical data are consistent with the scope of the present disclosure. As shown, the Stats-block 130 contains one Node-Stats-Entry and many Block-Stats-Entries (corresponding to the many data blocks of the data node).

Data in logs could be stored in a multitude of formats, including ASCII, tabular, text, etc. A "value" of the key-value pair is not limited to being a number - the value could be a string (e.g., a name), or other format. In an example of a data store including data for a phone log, the value includes: phone number, location, type of communication, duration, and person receiving.

According to examples of the present invention of the present disclosure, each data block contains multiple data entries. Each read or write performed by the system concerns at least one data block, with most data being write-once-read-many. Node-Stats-Entry serves as the head/descriptor of the data node. Each data block is able to contain different data - one data block can have, for example, a phone billing log, while another can contain binary images. Due to this potential variety across data blocks of the data node, it is useful to have a description of the data type(s) of the data node at the Node-Stats-Entry in order to calculate statistical data for the data node.

There are several significant advantages realized by keeping Stats-block 130 collocated with data blocks of that data node. Statistics of the data (both data block-level, and node-level) are able to be updated quickly, and maintenance of the system is simplified. Likewise, merging or splitting blocks and/or regions of the distributed file system is simplified. Results of OLAP functions are able to be pre-calculated, at the data block-level, with built-in support for typical functions (e.g., average, minimum, maximum, count, etc.) and user-defined functions implemented via plug-in framework provided by the native file system (e.g., HDFS). For a system configured to process data in parallel (e.g., an MPP system), a short-circuit read of data is readily optimized for predicate push-down. By a short-circuit read, one refers to a read received at and performed by a data node, without requiring processing at a higher level (e.g., the name node, or coordinator node of MPP), or at the same level (that is, other data nodes). Therefore, as a system according to examples of the present invention of the present disclosure contain statistical data related to all data blocks of the data node in memory, the system requires no querying of other data nodes to access information relating only to data stored at that data node.

While not depicted in Fig. 2, a Node-Stats-block (e.g., Node-Stats-block 140 of Fig. 1) can optionally be implemented at the top tier (e.g., cluster, or name node level). The Node-Stats-block contains a Node-Stats-Entry for each Stats-block of the cluster (that is, for each data node). The data are aggregated from Block-Stats-Entries, and form metadata of Stats-blocks of the system.

STATISTICAL DATA COLLECTION, MAINTENANCE, AND FAILOVER

Many big data implementations are designed to support very large files, and commonly a staging mechanism is utilized. Application writes are redirected to either a temporary local file or to memory. Once the accumulated data grows to be greater than one block in size, a request is sent to the cluster level node (e.g., name node) or directly at the data node level, which identifies a destination data block for data to be flushed to the disk. When a file is closed, the remaining un-flushed data is transferred to the disk, and the file is put into persistent store. Some data stores implement a more sophisticated method in order to support RDMS-like data manipulation commands (e.g., INSERT/UPDATE/DELETE), via log-structured merge-trees and tombstone markers that can be used to generate smaller files. Then a compaction procedure is periodically utilized to merge the smaller files into larger blocks. Instead of updating existing file blocks, a new block is allocated to replace the existing one. In contrast to those approaches, examples of the present invention according to the present disclosure provide three levels of consistency for statistical data collection and maintenance: strict, casual, and eventual.

For "strict" statistical data collection, changes to the data and statistical data are atomic and commit together, in real-time. This is the highest form of consistency and costs the most in terms of system resources. For casual statistical data collection, Block-Stats-Entry will be written when the data block to which the Block-Stats-Entry is mapped is flushed to disk, or the file is closed. For eventual statistical data collection, Block-Stats-Entries will be updated with a given (user-defined) period, or update is triggered by a compaction process.

When the system is configured for a "casual" or an "eventual" consistency level, the data correctness cannot be guaranteed by examination of the Stats-block alone. To guarantee retrieval of accurate data, a temporary file or memory store is required for storing up-to-the minute data. To achieve a strict level of consistency, one (or more) extra Block-Stats-Entries are preferably pre-allocated and dedicated to the data that is not yet in persistent store, and the statistical data need to be refreshed for every transaction.

Statistical data collection can be effected using one or more existing statistical data collector module (e.g., MySQL, Hive). The module is configured to point to a data block (e.g., Stats-block 130) and to store results on a data node (as compared to on a separate statistical data table, as is done conventionally).

A further aspect of an example of the present invention of the present disclosure regards a failover mechanism. Although each Stats-block a slot on disk is also provided for persistency, and the statistical data stored in memory are flushed to disk either periodically (via user-defined configuration) or by triggering events, such as user action, compaction, or system shutdown. During a normal shutdown, the Stats-block will be written to disk with the most recent statistical data.

In the case of unplanned failure, the information in the data block (Stats-block, that is) can be brought directly over to a new Stats-block on a new data node. The failover process moves each data block to another live data node, and the Stats-block in the new data node will be updated accordingly, as if new blocks are being added in during normal operation. System failover can be implemented in at least two ways: straightforward, and optimized. In a straightforward failover, the system is configured to have a transparent failover through generation of a new data block process (e.g., the Stats-block of the failing data node is copied to a new data block at the target data node). In an optimized failover, the Stats-block of the failing data node is reused via a replica of the statistical data, stored at another node, in order to restore the system to its original state.

VIRTUAL BLOCK

One of the advantages provided by embodiments of the present disclosure is the ability to keep all the statistical data in-memory (e.g., at the Stats-block), with each Block-Stats-Entry mapped to a data block being sufficiently large (e.g., 10~100KB) to store a variety of information related to the data block. This memory requirement for each Block-Stats-Entry poses a challenge, in the sense that storing all Stats-Entries for a Stats-block in memory may begin to exceed the hardware capacity of a system implementing the data node, as the amount of data in the data node (and at data blocks) increases. An aspect of the present disclosure addresses this issue via a construct termed the "Virtual Block," which is a logical group containing several data blocks of a data node. The Virtual Block acts as a middle layer for the scenario where too many data blocks exist on one data node for there to be a 1-to-1 mapping of Stats-Entries to data blocks. Rather than each Block-Stats-Entry of the Stats-block being mapped to a respective data block (as shown in Fig. 2), when a Virtual Block is configured each Block-Stats-Entry is mapped to a respective Virtual Block. Each Virtual Block is configured to map to a given (configurable) number of data blocks, and stores statistical data relating to those mapped data blocks. Memory allocation is made for each Virtual Block, with the total memory allocation for the Stats-block divided amongst the number of Virtual Blocks.

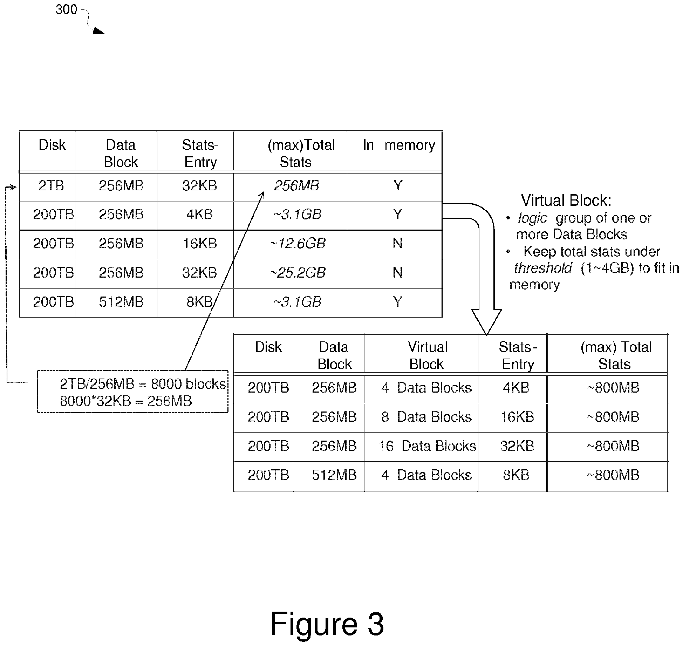

Referring now to Fig. 3, several Virtual Block configurations 300 for implementing a Stats-block are depicted. The upper table depicts several possible disk sizes, with corresponding data block size, Block-Stats-Entry size, maximum (total) size of Stats-block, and an indication of whether the Stats-block will fit in memory. Typically each data node of a distributed system will have a minimum of 32GB memory, with up to 96GB or 128GB memory in present-day systems. The ratio of the size of the memory in the data node compared to the size of the disk storage is important. If the Stats-block of the data node were to become too great, it is possible that the Stats-block implementation would not work for the system - this is the reason for which a Virtual Block is implemented.

For example, the first case shows a disk of 2TB in size, with a data block size of 256MB. The Block-Stats-Entry is therefore 32KB, with a total Stats-block size of 256MB. This size should be readily accommodated by memory presently available in computing systems. Conversely, a 200TB disk size with a 256MB data block leads to a Stats-block size of approximately 25GB, which will not readily fit into memory currently available.

For such a case the Virtual Block would be properly utilized. The number of data blocks that are mapped to a given Virtual Block is configurable, and can be recommended based on the particular hardware present in the system. The number of data blocks refers to the number of data blocks for which a given Stats-block-Entry is responsible for keeping the statistical data. The number of data blocks mapped to the generated Virtual Block is determined to ensure that the Stats-block does not become too large (e.g., too large to fit into memory). That is, the granularity of the Stats-block is able to be configured. If no Virtual Block is configured, granularity is 1-to-1, that is, statistical data from one data block corresponds to one Stats-block-Entry. If a Virtual Block is necessary to reduce memory footprint, granularity will be greater, such that statistical data of more than data block are stored in one Stats-block-Entry (e.g., 4-to-1, 8-to-1, 16-to-1, etc.). Changing the granularity with which the Stats-block is implemented is able to constrain memory usage, in order to guarantee that only one Stats-block is needed for a given data node.

The lower table depicts several possible configurations for implementing a Virtual Block for a data node having a 200TB disk size. For a data block size of 256MB and Block-Stats-Entry size of 4KB, the Virtual Block would correspond to 4 data blocks, leading to a total Stats-block memory size of approximately 800MB. For a data block size of 256MB and Block-Stats-Entry size of 16KB, the Virtual Block would correspond to 8 data blocks, again leading to a total Stats-block memory size of approximately 800MB. For a data block size of 256MB and Block-Stats-Entry size of 32KB, the Virtual Block would correspond to 16 data blocks, again leading to a total Stats-block memory size of approximately 800MB. Finally, for a data block size of 512MB and Block-Stats-Entry size of 8KB, the Virtual Block would correspond to 4 data blocks, leading to a total Stats-block memory size of approximately 800MB. As is shown, the Virtual Block can readily be configured to guarantee that the total size of the Stats-block will be accommodated by the memory of the data node.

Statistical data can be divided into two categories: those of fixed size (e.g., max, min, count, cardinality, etc.), and those of non-fixed size (e.g., histogram, pairs of distinct value and frequency). The fixed-size data are usually very small (100~500bytes), and the size is the same for all data blocks. The challenge arises from the non-fixed data, for example in a phone log, each pair of distinct phone number and frequency will be 10(digit)+4(int) = 14 bytes in an uncompressed case, and there may be thousands of distinct phone numbers in a given data block. One manner of addressing this problem is a hybrid approach wherein, for example, only the top ten pairs of phone number and frequency are kept, while the remaining pairs are kept in a histogram by range (for example, in total 11 ranges with top 10 phone numbers as a boundary). In this exemplary case, only approximately 300 bytes would be sufficient to store the statistical data. An advantage of HDFS (and many other big data implementations) with regard to data changes is that updates of stored data are not performed Therefore statistical data can be calculated once only, without the worry of overflow due to a later update. Thus, as long as the configuration of Block-Stats-Entry to data blocks (e.g., Virtual Block mapping) is pre-calculated in order to fit in each Block-Stats-Entry in memory, overflow will not occur due to input data.

AGGREGATED FUNCTIONS AND FILTER-FACTOR ESTIMATION:

By having the Stats-block in memory (e.g., all Block-Stats-Entries and Node-Stats-Entry), many analysis searches can be answered rapidly, with a reduction to or elimination of I/O to disk. A query can be optimized at data node level, for example in order to achieve local optimization of an MPP architecture. Furthermore, with the optional aggregation of Node-Stat-Entry and other selected information to the name node level (e.g., top level), optimization can also be carried out at cluster-level.

Although Count(*) is among the most common of OLAP functions, it remains a challenge for conventional data stores in the big data environment. For example, at the present time HBase must scan all data blocks of a table in order to obtain this information. In order to gain a similar level of performance as for a RDMS, conventional approaches must use a third-party method, like a row trigger API or a coprocessor. Even these approaches have difficulty in handling certain search predicates, such as those including timestamp ranges.

Embodiments according to the present disclosure provide a fast and robust solution for common OLAP functions. In-memory lookups at all Node-Stats-Entries are sufficient to provide many values for common OLAP functions. Additionally, the optional aggregated Node-Stats-Entries at Cluster-level (e.g., at Node-Stats-block 140 of name node 105) enable requests results via only one in-memory look-up, at the name node level. For the case of a range search of a key (e.g., search of peak time for phone calls in a day), each data node can perform one in-memory lookup at its respective Stats-block, with at most two I/O reads of the boundary data blocks. This represents a significant improvement compared to conventional approaches, which must read all data blocks of the data node. Further, this lookup read is able to be triggered via MPP, for example.

Searching of non-key values can be made more efficient in several ways. For example, the maximum, minimum, and count of non-key values can be aggregated at the name node. This aggregation can be done via a default process, where a MapReduce job is processed at each data node in order to retrieve the Node-Stats-Entry from that data nodes Stats-block, and the results are aggregated to the name node during execution time. Alternatively, an optimized process can include a copy of each Node-Stats-Entry (for each data node) being stored at cluster level, the copy storing may be at the name node, or at some other high-level system. Aggregation is able to be performed without a data read on data blocks of the data nodes. In the case of a system utilizing an MPP architecture, an MPP data node is able to retrieve its Node-Stats-Entry locally and to then aggregate the information up to the MPP coordinator.

Selectivity (e.g., filter factor) estimation is one of the key statistical data for query optimization, which directly impacts determination of JOIN sequence and workload balance in a distributed data store. A common approach to is to calculate and store this information in another (e.g., separate) database. However, this information easily becomes out-of-date with input of data in the distributed data store, and further cannot be leveraged at the data node level.

Embodiments of the present disclosure enable generation of accurate selectivity estimation, on-the-fly, without resource-intensive I/O operations, and without the need to store filter-factor on a third party database (as may be necessary in other approaches). All calculations rely on the existing in-memory statistical data (e.g., cardinality, histogram, maximum, minimum, count, etc.). The pseudo code below shows the computation process for an exemplary phone log data store, which is applicable for three levels - data block, data node, and cluster:

```
/* @ Data-Block Level */
int numberOfTransactionsAtBlock;
if phoneNumber <= Block-Stats-Entry.max(phoneNumber) &&
phoneNumber >= Block-Stats-Entry.min(phoneNumber) {
if Block-Stats-Entry.isAmongTop10Number(phoneNumber) {
    numberOfTransactionsAtBlock =
    histoGramsOfTop10(phoneNumber); // exact value
} else {
    numberOfTransactionsAtBlock =
    CardinalityofPhoneNumber * (Block-Stats-Entry.count - totalofTop10)/
     (CardinalityofPhoneNumber - 10); // estimated value
}
} else numberOfTransactionsAtBlock = 0;
```

```
Selectivity AtBlock = numberOfTransactionsAtBlock/CardinalityofPhoneNumber;
/* @ Data-Node level */
if phoneNumber <= Block-Stats-Entry.max(phoneNumber) &&
phoneNumber >= Block-Stats-Entry.min(phoneNumber) {
 invoke Data-Block Level logic above;
 SelectivityAtDataNode = sum(numberOfTransactionsAtBlock)/KVCount;
 } else SelectivityAtDataNode = 0;
 /* @ Cluster level */
 SelectivityAtCluster = sum(numberOfTransactionsAtDataNode)/KVCount;
```

The above logic, when utilized on a system according to the present disclosure, involves no I/O to the data block level. This is due to the fact that all the statistical data are stored in a Stats-block, the statistical data being either exactly accurate (when a strict consistency policy is used), or closely estimating (when a casual or an eventual consistency policy is used) the data presently stored at the data nodes of the distributed data store.

ENHANCED POINT SEARCH METHOD FOR COLUMN-STORE

In-memory statistics of data stored at the data block and data node levels enables enhanced search capability for extremely large datasets distributed over a data store. For example, with both maximum and minimum keys saved in both a Node-Stats-Entry and Block-Stats-Entries, a point search method can be applied to the predicate of a client request, on both keys and values. In an exemplary example of the present invention, a search will first sort by Block.min, and then sort by Block.max, discarding the data blocks with Block.max < searchValue or Block.min > searchValue. Only the remaining, qualified data blocks are scanned to match against the search value.
Exemplary pseudo code for performing a point search of a phone log of a distributed data store includes:

```
BlockMinMaxEntry[BlockId, Min, Max] // example: [blockID = 12, minPhone# = 4084932723,
maxPhone# = 4089980123]
ArrayList<BlockMinMaxEntry> BlockStats;
ArrayList<BlockMinMaxEntry> BlockStatsOrderbyMin = BlockStats.sort(min);
ArrayList<BlockMinMaxEntry> BlockStatsOrderbyMax = BlockStats.sort(max);
function Lookup(int value) {
 TargetBlocks =
    BlockStatsOrderbyMin.excludeMinLargerThan(value)
      union
    BlockStatsOrderbyMax.excludeMaxSmallerThan(value);
 Scan(TargetBlocks, value);
 }
```

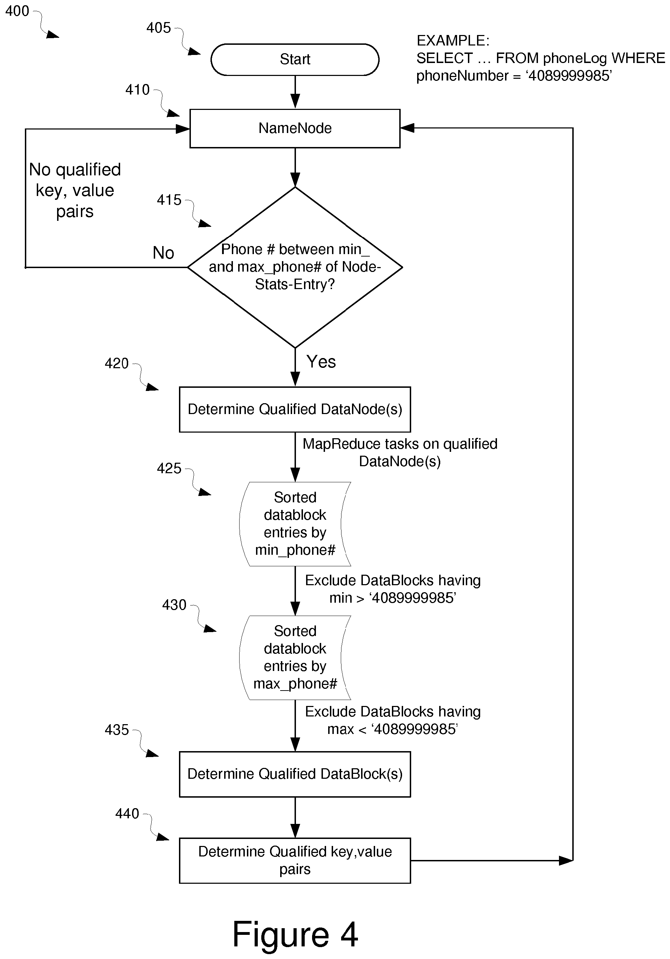

It should be noted that the ArrayList data (e.g., data stored at Block-Stats) are already in-memory, so that sorting can be performed quickly. Thus, qualifying data nodes (those data nodes having data meeting the request criteria) are determined quickly, via in-memory processing, and only the qualified data nodes require data blocks to be scanned to find the requested data. According to an example of the present invention of the present disclosure, statistical data is pre-sorted and the results stored in Node-Stats-Entry if a particular value and point search is common. A common point search may be user-defined, or alternatively, automatically determined by a system according to, for example, a threshold frequency with which the point search is performed.
Referring now to Fig. 4, a flowchart 400 of a process of a point search for a column stored value (e.g., key-value) in a data store is depicted, according to an example of the present invention of the present disclosure. Steps 405-440 describe exemplary steps comprising the process depicted in flowchart 400 in accordance with the various examples of the present invention herein described. In one example of the present invention, the flowchart 400 is implemented as computer-executable instructions stored in a computer-readable medium and performed by one or more computing devices executing a process for performing a point search for a column stored value in a distributed data store.
The process starts at step 405, with an exemplary search (e.g., client request) of a phone record: SELECT * FROM phoneLog WHERE phonenumber = '4089999985.' The process forwards the request to the name node of the distributed store at step 410. At step 415 the name node searches the statistical data stored at the Node-Stats-Entry level to determine if the requested phone number '4089999985' is between the minimum and the maximum of the stored values. The Node-Stats-Entries are an aggregate of all data nodes of the data store, and therefore if the phone number is not found to be between the minimum and maximum of the phone numbers recorded at the Node-Stats-Entry level, the phone number is not present in any data node of the distributed data store. Therefore, if at step 415 the result is NO, the result returned to the name node is that no qualified key-value pairs are present for the request. If at step 415 the name node determines YES, the phone number is between the minimum and maximum via the Node-Stats-Entry, the process continues to step 420.

At step 420 a search is performed for the data nodes of the distributed store that qualify for the phone number being queried. A search is only performed for the requested data on data stored by qualified data nodes. Qualified data nodes can be determined by the Node-Stats-Entry, which can include common information such as the maximum and minimum values of keys stored in the data node. According to an example of the present invention, VlapReduce tasks are performed on qualified data nodes to sort the data stored by each data node.

At step 425 a search is made (e.g., via a search algorithm) for the phone number satisfying the request criteria. The search may be made against the statistical data stored in Stats-block of each qualifying data node, which contains statistical data on each data block of the data node. In the example search, if the minimum of a data block is greater than number searched, the data block cannot qualify and is excluded. Thus, non-qualifying data blocks can be excluded, for each qualifying data node (determined at step 420).

At step 430, the search is continued to be made for the phone number against the statistical data stored in Stats-block of each qualifying data node. At step 430 the maximum of a data block is searched, and if the maximum of the data block is less than the number searched, the data block cannot qualify and is excluded. Thus, further non-qualifying data blocks can be excluded, for each qualifying data node (determined at step 420).

At step 435 the results of step 425 and 430 are used to determine the qualified data blocks of the distributed data store, which may be on more than one data node in the network.

At step 440 an iterative loop is performed over values stored in the qualified data blocks determined at step 435. In contrast to steps 405-434, which can be performed via in-memory processing only (e.g., by analyzing data stored at respective Stats-blocks of data nodes of the system), step 440 involves input/output scans of data blocks, at the disk level. Thus, a majority of the filtering for a request is done via in-memory processing only, and can be performed against key and non-key values. Further, querying can be done at all levels (top, middle, lower - e.g., name node, data node, data block).

EXEMPLARY COMPUTING SYSTEM

According to an example of the present invention, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be database servers, storage devices, desktop computer systems, portable computer systems, handheld devices, networking devices or any other device that incorporates hard-wired and/or program logic to implement the techniques.

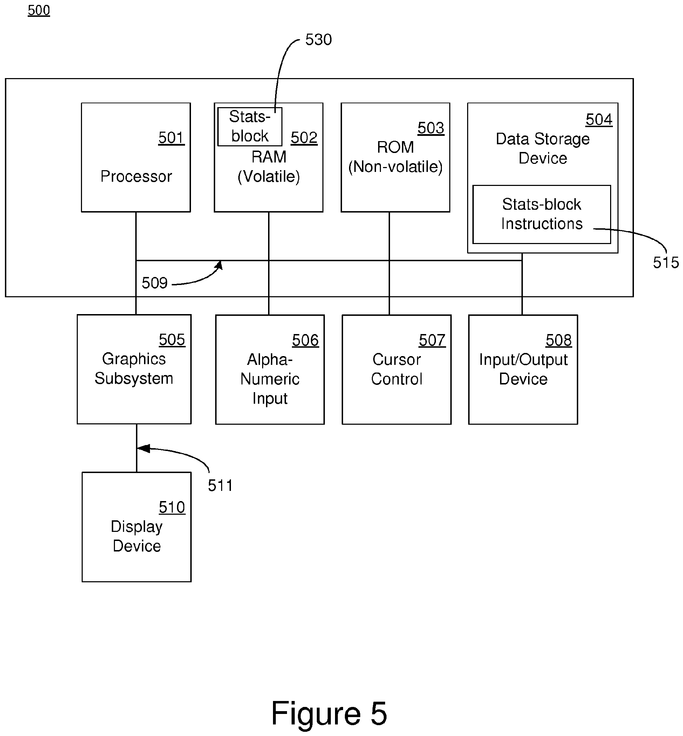

Figure 5 illustrates an exemplary configuration of an apparatus 500 in accordance with various embodiments of the present disclosure. The exemplary system 500 upon which embodiments of the present invention may be implemented includes a general purpose computing system environment. In its most basic configuration, computing system 500 typically includes at least one processing unit 501 and memory, and an address/data bus 509 (or other interface) for communicating information. Depending on the exact configuration and type of computing system environment, memory may be volatile (such as RAM 502), non-volatile (such as ROM 503, flash memory, etc.) or some combination of the two.

Computer system 500 may also comprise an optional graphics subsystem 505 for presenting information to the computer user, e.g., by displaying information on an attached display device 510, connected by a video cable 511. According to examples of the present invention of the present disclosure, the graphics subsystem 505 may be coupled directly to the display device 510 through the video cable 511. In alternate examples of the present invention, display device 510 may be integrated into the computing system (e.g., a laptop or netbook display panel) and will not require a video cable 511.

Additionally, computing system 500 may also have additional features/functionality. For example, computing system 500 may also include additional storage media (removable and/or non-removable) including, but not limited to, magnetic or optical disks or tape. Such additional storage is illustrated in Figure 5 by data storage device 504. Computer storage media includes volatile and nonvolatile, removable and non-removable media implemented in any method or technology for storage of information such as computer readable instructions, data structures, program modules or other data. RAM 502, ROM 503, and data storage device 504 are all examples of computer storage media. RAM 502 may include a Stats-block 530 as described herein, and data storage device 504 may include Stats-block instructions 515, which comprise software that is executable by a processor (e.g. 501) to impart the computing system 500 with some or all of the functionality described herein.

Computer system 500 also comprises an optional alphanumeric input device 506, an optional cursor control or directing device 507, and one or more signal communication interfaces (input/output devices, e.g., a network interface card, and/or a transmitter and receiver, also called a "transceiver") 508. Optional alphanumeric input device 506 can communicate information and command selections to central processor 501. Optional cursor control or directing device 507 is coupled to bus 509 for communicating user input information and command selections to central processor 501. Signal communication interface (input/output device) 508, also coupled to bus 509, can be a serial port. Communication interface 508 may also include wireless communication mechanisms. Using communication interface 508, computer system 500 can be communicatively coupled to other computer systems over a communication network such as the Internet, a software defined network (SDN), or an intranet (e.g., a local area network), or can receive data (e.g., a digital television signal).

In the foregoing detailed description of embodiments of the present disclosure, numerous specific details have been set forth in order to provide a thorough understanding of the present disclosure. However, it will be recognized by one of ordinary skill in the art that the present disclosure is able to be practiced without these specific details. In other instances, well-known methods, procedures, components, and circuits have not been described in detail so as not to unnecessarily obscure aspects of the embodiments of the present invention. Although a method is able to be depicted as a sequence of numbered steps for clarity, the numbering does not necessarily dictate the order of the steps. It should be understood that some of the steps may be skipped, performed in parallel, or performed without the requirement of maintaining a strict order of sequence. The drawings showing examples of the invention are semi-diagrammatic and not to scale and, particularly, some of the dimensions are for the clarity of presentation and are shown exaggerated in the drawing Figures. Similarly, although the views in the drawings for the ease of description generally show similar orientations, this depiction in the Figures is arbitrary for the most part.

Embodiments according to the present disclosure are thus described. While the present disclosure has been described in particular embodiments, it is intended that the invention shall be limited only to the extent required by the appended claims and the rules and principles of applicable law.

**Claims**

1. A method of storing statistical data of records stored in a distributed file system, the method comprising:

    allocating a statistical data block in a memory of a data node, the statistical data block for storing statistical data of distributed file system records stored by the data node in a storage disk having a plurality of data blocks, the data node associated with the distributed file system;
    associating a plurality of entries of the statistical data block with respective data blocks of the plurality of data blocks;
    collecting the statistical data of the distributed file system records stored in the data node;
    writing the statistical data to the plurality of entries of the statistical data block, the plurality of entries storing statistical data of associated data blocks of the plurality of data blocks;
    wherein the allocating a statistical data block comprises allocating a virtual block, the virtual block comprising a plurality of virtual block statistical data entries, a virtual block statistical data entry of the plurality of virtual block statistical data entries corresponding to a set of data blocks of the plurality of data blocks.

2. The method of Claim 1, wherein the statistical data are maintained via a same file system as is used to distribute records in the distributed file system.

3. The method of any claims of claim 1 to claim 2, wherein the statistical data are updated in real-time, following any data transaction with the distributed file system.

4. The method according to Claim 3, wherein an update periodicity is determined automatically, based upon at least one of: a transfer of the statistical data in the memory of the data node to the storage disk of the data node, and; a closing of a file comprising records of the distributed file system.

5. The method according to any claims of claim 1 to claim 3, wherein the distributed file system comprises a plurality of data nodes with respective storage disks having respective pluralities of data blocks; and
wherein the allocating the statistical data block in the memory of the data node includes allocating, at a second data node of the plurality of data nodes, a second statistical data block in a second memory of the second data node, for storing a replica of the statistical data.

6. The method according to Claim 5, wherein, upon detection of a failure of the data node, the statistical data is written to the second statistical data block in the second data node, for storing the replica of the statistical data.

7. An apparatus (500) comprising:

a transceiver (508) configured to communicate with a coordinator node of a distributed file system;
a memory (502);
a computer-readable storage medium (504) comprising a plurality of data blocks and storing programming instructions; and
a processor (501) configured to execute the instructions, the instructions causing the processor to allocate a statistical data block (530) in the memory, the statistical data block (530) configured to store statistical data of records stored in the distributed file system, the instructions further causing the processor to associate a plurality of entries of the statistical data block (530) with respective data blocks of the plurality of data blocks, the instructions further causing the processor to collect the statistical data of the records, and to write the statistical data to the plurality of entries of the statistical data block (530), the plurality of entries storing statistical data of associated data blocks of the plurality of data blocks;
wherein to allocate a statistical data block (530) comprises allocating a virtual block, the virtual block comprising a plurality of virtual block statistical data entries, a virtual block statistical data entry of the plurality of virtual block statistical data entries corresponding to a set of data blocks of the plurality of data blocks.

8. The apparatus (500) according to claim 7, wherein a number of data blocks in the set of data blocks is automatically configured, based upon a storage size of the computer-readable storage medium (504) and a storage size of data blocks of the plurality of data blocks.

9. The apparatus (500) of any claims of claim 7 to claim 8, wherein the statistical data block (530) is further configured to comprise a data node entry comprising statistical data associated with aggregated data of all data blocks of the plurality of data blocks.

10. The apparatus (500) according to Claim 9, wherein the instructions cause the processor (501) to report the statistical data associated with aggregated data to the coordinator node of the distributed file system.

11. The apparatus (500) according to any claims of claim 7 to claim 10 wherein the statistical data are updated in real-time, following any data transaction with a data block of the plurality of data blocks in the computer-readable storage medium (504).

12. The apparatus (500) according to Claim 7, wherein the statistical data are updated with a periodicity, the periodicity determined based upon a compaction of records stored by the plurality of data blocks in the computer-readable storage medium (504).

13. A computer software product comprising instructions which, when executed by a computer, cause the computer to carry out the method of any claims of claim 1 to 6.

14. A computer-readable storage medium comprising instructions which, when executed by a computer, cause the computer to carry out the method of any claims of claim 1 to 6.

**Patentansprüche**

1. Verfahren zum Speichern von statistischen Daten von in einem verteilten Dateisystem gespeicherten Datensätzen, wobei das Verfahren Folgendes aufweist:

Zuweisen eines statistischen Datenblocks in einem Speicher eines Datenknotens, wobei der statistische Datenblock zum Speichern von statistischen Daten von verteilten Dateisystemdatensätzen dient, die durch den Datenknoten auf einer Speicherplatte gespeichert werden, die mehrere Datenblöcke aufweist, wobei der Datenknoten mit dem verteilten Dateisystem verknüpft ist;
Verknüpfen von mehreren Einträgen des statistischen Datenblocks mit entsprechenden Datenblöcken der mehreren Datenblöcke;
Sammeln der statistischen Daten der im Datenknoten gespeicherten verteilten Dateisystemdatensätze;

Schreiben der statistischen Daten in die mehreren Einträge des statistischen Datenblocks, wobei die mehreren Einträge statistische Daten von verknüpften Datenblöcken der mehreren Datenblöcke speichern; wobei das Zuweisen eines statistischen Datenblocks Zuweisen eines virtuellen Blocks aufweist, wobei der virtuelle Block mehrere statistische Dateneinträge des virtuellen Blocks aufweist, wobei ein statistischer Dateneintrag des virtuellen Blocks der mehreren statistischen Dateneinträge des virtuellen Blocks einer Menge von Datenblöcken der mehreren Datenblöcke entspricht.

2. Verfahren nach Anspruch 1, wobei die statistischen Daten über ein gleiches Dateisystem gepflegt werden, wie es zum Verteilen von Datensätzen im verteilten Dateisystem verwendet wird.

3. Verfahren nach einem der Ansprüche 1 bis 2, wobei die statistischen Daten in Echtzeit aktualisiert werden, im Anschluss an eine beliebige Datentransaktion mit dem verteilten Dateisystem.

4. Verfahren nach Anspruch 3, wobei eine Aktualisierungsperiodizität automatisch bestimmt wird, basierend auf zumindest einem aus: einer Übertragung der statistischen Daten im Speicher des Datenknotens zur Speicherplatte des Datenknotens und einem Schließen einer Datei, die Datensätze des verteilten Dateisystems aufweist.

5. Verfahren nach einem der Ansprüche 1 bis 3, wobei das verteilte Dateisystem mehrere Datenknoten mit entsprechenden Speicherplatten aufweist, die entsprechende mehrere Datenblöcke haben; und wobei das Zuweisen des statistischen Datenblocks im Speicher des Datenknotens Zuweisen, an einem zweiten Datenknoten der mehreren Datenknoten, eines zweiten statistischen Datenblocks in einem zweiten Speicher des zweiten Datenknotens, zum Speichern einer Kopie der statistischen Daten aufweist.

6. Verfahren nach Anspruch 5, wobei, bei Detektion eines Ausfalls des Datenknotens, die statistischen Daten in den zweiten statistischen Datenblock im zweiten Datenknoten geschrieben werden, zum Speichern der Kopie der statistischen Daten.

7. Vorrichtung (500), die Folgendes aufweist:

einen Sendeempfänger (508), ausgebildet zum Kommunizieren mit einem Koordinatorknoten eines verteilten Dateisystems;
einen Speicher (502);
ein computerlesbares Speichermedium (504), das mehrere Datenblöcke aufweist und Programmieranweisungen speichert; und
einen Prozessor (501), ausgebildet zum Ausführen der Anweisungen, wobei die Anweisungen den Prozessor veranlassen, einen statistischen Datenblock (530) im Speicher zuzuweisen, wobei der statistische Datenblock (530) ausgebildet ist zum Speichern von statistischen Daten von in dem verteilten Dateisystem gespeicherten Datensätzen, wobei die Anweisungen ferner den Prozessor veranlassen, mehrere Einträge des statistischen Datenblocks (530) mit entsprechenden Datenblöcken der mehreren Datenblöcke zu verknüpfen, wobei die Anweisungen ferner den Prozessor veranlassen, die statistischen Daten der Datensätze zu sammeln und die statistischen Daten in die mehreren Einträge des statistischen Datenblocks (530) zu schreiben, wobei die mehreren Einträge statistische Daten von verknüpften Datenblöcken der mehreren Datenblöcke speichern;
wobei Zuweisen eines statistischen Datenblocks (530) Zuweisen eines virtuellen Blocks aufweist, wobei der virtuelle Block mehrere statistische Dateneinträge des virtuellen Blocks aufweist, wobei ein statistischer Dateneintrag des virtuellen Blocks der mehreren statistischen Dateneinträge des virtuellen Blocks einer Menge von Datenblöcken der mehreren Datenblöcke entspricht.

8. Vorrichtung (500) nach Anspruch 7, wobei eine Anzahl von Datenblöcken in der Menge von Datenblöcken automatisch ausgebildet wird, basierend auf einer Speichergröße des computerlesbaren Speichermediums (504) und einer Speichergröße von Datenblöcken der mehreren Datenblöcke.

9. Vorrichtung (500) nach einem der Ansprüche 7 bis 8, wobei der statistische Datenblock (530) ferner dazu ausgebildet ist, einen Datenknoteneintrag aufzuweisen, der statistische Daten aufweist, die mit den aggregierten Daten aller Datenblöcke der mehreren Datenblöcke verknüpft sind.

10. Vorrichtung (500) nach Anspruch 9, wobei die Anweisungen den Prozessor (501) veranlassen, die mit den aggregierten Daten verknüpften statistischen Daten an den Koordinatorknoten des verteilten Dateisystems zu melden.

**11.** Vorrichtung (500) nach einem der Ansprüche 7 bis 10, wobei die statistischen Daten in Echtzeit aktualisiert werden, im Anschluss an eine beliebige Datentransaktion mit einem Datenblock der mehreren Datenblöcke im computerlesbaren Speichermedium (504).

**12.** Vorrichtung (500) nach Anspruch 7, wobei die statistischen Daten mit einer Periodizität aktualisiert werden, wobei die Periodizität basierend auf einer Komprimierung der durch die mehreren Datenblöcke im computerlesbaren Speichermedium (504) gespeicherten Datensätze bestimmt wird.

**13.** Computersoftwareprodukt, Anweisungen aufweisend, die, wenn sie durch einen Computer ausgeführt werden, den Computer veranlassen, das Verfahren nach einem der Ansprüche 1 bis 6 auszuführen.

**14.** Computerlesbares Speichermedium, Anweisungen aufweisend, die, wenn sie durch einen Computer ausgeführt werden, den Computer veranlassen, das Verfahren nach einem der Ansprüche 1 bis 6 auszuführen.

**Revendications**

**1.** Procédé de stockage de données statistiques d'enregistrements stockés dans un système de fichiers distribué, le procédé comprenant :

l'attribution d'un bloc de données statistiques dans une mémoire d'un nœud de données, le bloc de données statistiques destiné à stocker des données statistiques d'enregistrements de système de fichiers distribué stockés par le nœud de données dans un disque de stockage ayant une pluralité de blocs de données, le nœud de données étant associé au système de fichiers distribué ;
l'association d'une pluralité d'entrées du bloc de données statistiques avec des blocs de données respectifs de la pluralité de blocs de données ;
la collecte des données statistiques des enregistrements de système de fichiers distribué stockés dans le nœud de données ;
l'écriture des données statistiques dans la pluralité d'entrées du bloc de données statistiques, la pluralité d'entrées stockant des données statistiques de blocs de données associés de la pluralité de blocs de données ;
l'attribution d'un bloc de données statistiques comprenant l'attribution d'un bloc virtuel, le bloc virtuel comprenant une pluralité d'entrées de données statistiques de bloc virtuel, une entrée de données statistiques de bloc virtuel de la pluralité d'entrées de données statistiques de bloc virtuel correspondant à un ensemble de blocs de données de la pluralité de blocs de données.

**2.** Procédé selon la revendication 1, les données statistiques étant gérées par l'intermédiaire d'un même système de fichiers que celui utilisé pour distribuer les enregistrements dans le système de fichiers distribué.

**3.** Procédé selon l'une quelconque des revendications 1 à 2, les données statistiques étant mises à jour en temps réel, à la suite de toute transaction de données avec le système de fichiers distribué.

**4.** Procédé selon la revendication 3, une périodicité de mise à jour étant déterminée automatiquement, sur la base d'au moins un des éléments suivants : un transfert des données statistiques dans la mémoire du nœud de données vers le disque de stockage du nœud de données, et ; une fermeture d'un fichier comprenant des enregistrements du système de fichiers distribué.

**5.** Procédé selon l'une quelconque des revendications 1 à 3, le système de fichiers distribué comprenant une pluralité de nœuds de données avec des disques de stockage respectifs ayant des pluralités respectives de blocs de données ; et
l'attribution du bloc de données statistiques dans la mémoire du nœud de données comprenant l'attribution, à un second nœud de données de la pluralité de nœuds de données, d'un second bloc de données statistiques dans une seconde mémoire du second nœud de données, pour stocker une réplique des données statistiques.

**6.** Procédé selon la revendication 5, lors de la détection d'une défaillance du nœud de données, les données statistiques étant écrites dans le second bloc de données statistiques dans le second nœud de données, pour stocker la réplique des données statistiques.

**7.** Appareil (500) comprenant :

un émetteur-récepteur (508) configuré pour communiquer avec un nœud de coordination d'un système de fichiers distribué ;

une mémoire (502) ;

un support de stockage lisible par ordinateur (504) comprenant une pluralité de blocs de données et stockant des instructions de programmation ; et

un processeur (501) configuré pour exécuter les instructions, les instructions amenant le processeur à attribuer un bloc de données statistiques (530) dans la mémoire, le bloc de données statistiques (530) étant configuré pour stocker des données statistiques d'enregistrements stockés dans le système de fichiers distribué, les instructions amenant en outre le processeur à associer une pluralité d'entrées du bloc de données statistiques (530) à des blocs de données respectifs de la pluralité de blocs de données, les instructions amenant en outre le processeur à collecter les données statistiques des enregistrements, et à écrire les données statistiques dans la pluralité d'entrées du bloc de données statistiques (530), la pluralité d'entrées stockant des données statistiques de blocs de données associés de la pluralité de blocs de données ;

l'attribution d'un bloc de données statistiques (530) comprenant l'attribution d'un bloc virtuel, le bloc virtuel comprenant une pluralité d'entrées de données statistiques de bloc virtuel, une entrée de données statistiques de bloc virtuel de la pluralité d'entrées de données statistiques de bloc virtuel correspondant à un ensemble de blocs de données de la pluralité de blocs de données.

8. Appareil (500) selon la revendication 7, un certain nombre de blocs de données dans l'ensemble de blocs de données étant automatiquement configuré, sur la base d'une taille de stockage du support de stockage lisible par ordinateur (504) et d'une taille de stockage de blocs de données de la pluralité de blocs de données.

9. Appareil (500) selon l'une quelconque des revendications 7 à 8, le bloc de données statistiques (530) étant en outre configuré pour comprendre une entrée de nœud de données comprenant des données statistiques associées à des données agrégées de tous les blocs de données de la pluralité de blocs de données.

10. Appareil (500) selon la revendication 9, les instructions amenant le processeur (501) à rapporter les données statistiques associées aux données agrégées au nœud de coordination du système de fichiers distribué.

11. Appareil (500) selon l'une quelconque des revendications 7 à 10, les données statistiques étant mises à jour en temps réel, à la suite de toute transaction de données avec un bloc de données de la pluralité de blocs de données dans le support de stockage lisible par ordinateur (504).

12. Appareil (500) selon la revendication 7, les données statistiques étant mises à jour avec une périodicité, la périodicité étant déterminée sur la base d'un compactage d'enregistrements stockés par la pluralité de blocs de données dans le support de stockage lisible par ordinateur (504).

13. Produit logiciel comprenant des instructions qui, lorsqu'elles sont exécutées par un ordinateur, amènent l'ordinateur à effectuer le procédé selon l'une quelconque des revendications 1 à 6.

14. Support de stockage lisible par ordinateur comprenant des instructions qui, lorsqu'elles sont exécutées par un ordinateur, amènent l'ordinateur à effectuer le procédé selon l'une quelconque des revendications 1 à 6.

Distributed Data
Store 100

# Figure 1

**Exemplary Node-
Stats-Entry :**

• Block- map:
     isEmpty?
     dataType?
• Timestamp last update
• Total count of the Node
• HighKey of all phone#
• LowKey of all phone#
• Histogram...
.....

130

132

Node-stats-
entry

Blocks-stats-
entry 1

Blocks-stats-
entry 2

135

Blocks-stats-
entry M

Stats-block (DB0)

Stats Collector

Key, Value
[time1, log1]
[time2, log2]
...
[timeN, logN]

Stats-block

DB0 DB1
DB2 DB3
DB4 DB5
DB6 DB7
... DBM
Disk

Data Node 1

**Exemplary Block- Stats- Entry :**
• Count: total entries of this data block
• HighKey : newest timestamp of the log
• LowKey : oldest timestamp of the log
• MaxPhone # : high key of user phone #
• MinPhone #: low key of user phone #
• MaxBilling : largest bill
• MinBilling : lowest bill
• HistogramByTimestamp
• HistogramByUserIDandBilling
• Histogram of top 10 Callers

## Figure 2

300

| Disk | Data Block | Stats-Entry | (max)Total Stats | In memory |
|------|-----------|-------------|------------------|-----------|
| 2TB | 256MB | 32KB | *256MB* | Y |
| 200TB | 256MB | 4KB | *~3.1GB* | Y |
| 200TB | 256MB | 16KB | *~12.6GB* | N |
| 200TB | 256MB | 32KB | *~25.2GB* | N |
| 200TB | 512MB | 8KB | *~3.1GB* | Y |

Virtual Block:
- *logic* group of one or more Data Blocks
- Keep total stats under *threshold* (1~4GB) to fit in memory

2TB/256MB = 8000 blocks
8000*32KB = 256MB

| Disk | Data Block | Virtual Block | Stats-Entry | (max) Total Stats |
|------|-----------|---------------|-------------|-------------------|
| 200TB | 256MB | 4 Data Blocks | 4KB | ~800MB |
| 200TB | 256MB | 8 Data Blocks | 16KB | ~800MB |
| 200TB | 256MB | 16 Data Blocks | 32KB | ~800MB |
| 200TB | 512MB | 4 Data Blocks | 8KB | ~800MB |

# Figure 3

400

405

Start

EXAMPLE:
SELECT ... FROM phoneLog WHERE
phoneNumber = '4089999985'

410

NameNode

No qualified
key, value
pairs

415

No

Phone # between min_
and max_phone# of Node-
Stats-Entry?

Yes

420

Determine Qualified DataNode(s)

MapReduce tasks on qualified
DataNode(s)

425

Sorted
datablock
entries by
min_phone#

Exclude DataBlocks having
min > '4089999985'

430

Sorted
datablock
entries by
max_phone#

Exclude DataBlocks having
max < '4089999985'

435

Determine Qualified DataBlock(s)

440

Determine Qualified key,value
pairs

Figure 4

500

530

| 501 Processor | Stats-block 502 RAM (Volatile) | 503 ROM (Non-volatile) | 504 Data Storage Device Stats-block Instructions |

515

509

| 505 Graphics Subsystem | 506 Alpha-Numeric Input | 507 Cursor Control | 508 Input/Output Device |

511

510 Display Device

# Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014046903 A1
- CN 102968423 A